# EUROPEAN PATENT SPECIFICATION

(11) **EP 4 147 518 B1**
(45) Date of publication and mention of the grant of the patent: **17.09.2025**
(21) Application number: 21723246.1
(22) Date of filing: 04.05.2021
(51) Int. Cl.: H04W 72/56, H04W 40/22, H04W 28/02, H04W 76/20, H04W 84/18

(54) **NETWORK RESOURCE ALLOCATION FOR PUBLIC SAFETY COMMUNICATIONS**
NETZWERKRESSOURCENZUWEISUNG FÜR ÖFFENTLICHE SICHERHEITSKOMMUNIKATIONEN
ATTRIBUTION DE RESSOURCES DE RÉSEAU POUR DES COMMUNICATIONS DE SÉCURITÉ PUBLIQUE

(30) Priority: 06.05.2020 US 202063020756 P
(43) Date of publication of application: 15.03.2023
(73) Proprietor: Telefonaktiebolaget LM ERICSSON (PUBL), 16483 Stockholm (SE)
(72) Inventor: MAKKI, Behrooz, 435 43 Pixbo (SE); LI, Jingya, 417 58 Göteborg (SE)
(74) Representative: Ericsson
(86) International application number: PCT/EP2021/061666
(87) International publication number: WO 2021/224223

(56) References cited:
- WO-A1-2020/032638
- WO-A1-2020/056700
- LG ELECTRONICS INC: "Discussion on route functionality in IAB", vol. RAN WG2, no. Xi'an, China; 20190408 - 20190412, 6 April 2019 (2019-04-06), XP051702220, Retrieved from the Internet <URL:http://www.3gpp.org/ftp/Meetings%5F3GPP%5FSYNC/RAN2/Docs/R2%2D1904941%2Ezip> [retrieved on 20190406]

## Description

### TECHNICAL FIELD

Disclosed are embodiments related to network resource allocation.

### BACKGROUND

Public safety communications are communications within a public safety authority or between different public safety authorities. The term 'authorities' refers to emergency first responders (fire-fighters, police, paramedics etc.), emergency control centers, public safety answering points (PSAP), local administration or any other organization with the responsibility of providing services that ensure safety and security of citizens who are under risk or affected by an emergency event. This type of communication may be a Mission Critical (MC) communication, where if the communication is lost, then the consequences may be dire.

Traditionally, the public safety community has used land mobile radio (LMR) systems for Push-to-Talk (PTT) as the primary mobile communication system. Terrestrial Trunked Radio (see en.wikipedia.org/wiki/Terrestrial_Trunked_Radio) and Project25 (a suite of standards for digital mobile radio communications designed for use by public safety organizations in North America -- see en.wikipedia.org/wiki/Project _25) are the predominant modern PTT systems for MC communications and first responder usage. These narrowband systems provide voice-centric services with limited data capabilities. In addition, different public safety institutions typically use different networks (frequencies and technologies), which makes inter-agency communication difficult to coordinate.

To support more advanced MC services and use cases and thereby improve the situational awareness and enhance operational effectiveness and safety for first responders, MC communications will transition over the next decade from narrowband proprietary radio networks to Third Generation Partnership Project (3GPP) Fourth Generation (4G) and or Fifth Generation (5G) broadband networks. Many public safety communities have already begun the journey from using existing specialist narrowband technologies, combined with best-effort commercial data services such as 3G, and have recognized the need to move to critical broadband networks built using 4G (a.k.a., Long Term Evolution (LTE)) technology, where all their applications (voice, data and video) can be hosted successfully on the same network, and with the ability to continuously leverage the latest advancements in 3GPP technologies such as 5G.

High availability and reliability are key requirements of public safety. For instance, when a police officer is in a dangerous situation, the officer must be able to rely on their radio device (a.k.a., user equipment (UE)). On the other hand, public safety systems should be able to provide temporally on-demand coverage. For instance, with a building on fire, we may need to extend the indoor coverage area immediately such that the fire fighters inside the burning building have good network coverage with high reliability and low latency regardless of the floor of building in which they are located. Also, compared to non-priority UEs, these priority UEs (e.g., MC UEs) have higher priority to be served, which poses the requirement of rapid adaptation of resource allocation/topology adaptation of the communication network.

In 3GPP LTE and New Radio (NR) systems, the Quality of Service (QoS) requirements for MC services (e.g., MC push-to-talk (MCPTT), MCData and MCvideo) are very strict. A MC communication system needs to provide high availability and high reliability for MC services in all scenarios where the MC UEs are within terrestrial cellular network coverage or out of terrestrial cellular network coverage. In critical situations where the network is overloaded, high priority and pre-emption functionalities are needed to ensure that MC UEs' traffic flows under network congestion.

In 3GPP, there is ongoing work related to Integrated Access and Backhaul (IAB) based on earlier study item documented in 3GPP TR 38.874. With IAB, the idea is to densify the network with a large number of access points (APs) each one serving a number of UEs inside one of its cells. Here, while one of the IAB nodes (called the IAB donor) is connected to a core network via fiber connection, in a multi-hop setup, the following IAB nodes are wirelessly backhauled. Compared to the cases with few macro base stations (BSs) covering a wide area, less path loss/shadowing, and higher line-of-sight (LOS) connection probability are expected in IAB networks. As a result, better channel quality is experienced in these short-range links, compared to the cases with few macro BSs. Also, along with reducing the installation costs, IAB networks increase the flexibility to provide quick coverage for areas of interest.

WO 2020032638 A1 discloses a method for detecting failure of a connection on a wireless backhaul link and performing connection reestablishment based on a parameter related to the failure. WO 2020056700 A1 discloses a method for admission control, wherein a terminal device transmits a request for admission to an IAB node and the admission request is granted if an IAB node can accept the resource request in the admission request. "Discussion on route functionality in IAB" by LG Electronics Inc., 3GPP draft; R2-1904941 Discussion on route functionality in IAB, 3GPP, Mobile competence centre; 650, Route des Lucioles; F-06921 Sophia-Antipolis Cedex; France; discloses routing for network traffic with different QoS requirements in an IAB network based on single next-hop entry.

### SUMMARY

The scope of the present invention is defined in the appended independent claims. Specific embodiments of the present invention are defined in the dependent claims.

Certain challenges presently exist. For instance, certain public safety systems are based on simple voice-based communications with low adaptation capability, and, as a result, they suffer from low on-demand coverage and availability, especially when the size of the network increases. On the other hand, with priority UEs (e.g., UEs used by a first responder) in a network, the non-priority UEs may experience no connections or poor connections. Also, it is desirable to develop methods which facilitate the connection process in the networks consisting of priority UEs, and provide them with quick coverage as soon as they ask for communication. Finally, the current resource multiplexing in the IAB design is not optimized for the cases where different UEs have different priorities and service requirements.

A first aspect is according to independent claim 1. Accordingly, there is provided a control node method in a network comprising a control node, a first access node, and a second access node, where there is a first link between the control node and the first access node and there is a second link between the first access node and the second access node. The second access node provides network access to a non-priority UE. The method includes the control node determining that a priority UE is attempting to establish a connection with the network. The method also includes, after determining that the priority UE is attempting to establish a connection with the network, the control node prioritizing at least the first link for the priority UE. The method also includes the control node determining an alternate link to the second access node for use in carrying traffic to and/or from the non-priority UE to which the second access node provides access, wherein the alternate link does not include the first link between the control node and the first access node.

Another aspect is according to independent claim 16. Accordingly, there is provided a computer program comprising instructions which when executed by processing circuitry of a control node causes the control node to perform any of the control node methods disclosed herein. According to independent claim 18, there is provided a carrier containing the computer program wherein the carrier is one of an electronic signal, an optical signal, a radio signal, and a computer readable storage medium According to independent claim 19, there is provided a control node that is configured to perform any of the control node methods disclosed herein. The control node may include memory and processing circuitry coupled to the memory.

Another aspect is according to independent claim 11. Accordingly, there is provided an access node method in a network comprising a control node, a first access node, and a second access node. There is a first link between the control node and the first access node, and there is a second link between the second access node and the first access node. The method includes the second access node providing network access to a non-priority UE. The method also includes the second access node determining that a priority UE is attempting to establish a connection with the network. The method also includes, after determining that the priority UE is attempting to establish a connection with the network, the second access node prioritizing the second link for the priority UE. The method further includes the second node determining an alternate link to the control node for use in carrying traffic for and/or from the non-priority UE, wherein the alternate link does not include the second link between the second access node and the first access node.

Another aspect is according to independent claim 17. Accordingly, there is provided a computer program comprising instructions which when executed by processing circuitry of an access node causes the access node to perform any of the access node methods disclosed herein. According to independent claim 18, there is provided a carrier containing the computer program wherein the carrier is one of an electronic signal, an optical signal, a radio signal, and a computer readable storage medium According to independent claim 20, there is provided an access node that is configured to perform any of the access node methods disclosed herein. The access node may include memory and processing circuitry coupled to the memory.

Advantages of the embodiment include enabling an adaptive IAB network to, among other things, serve public safety systems. For example, priority UEs can be provided with quick, on-demand coverage, thereby reducing the access delay, and, at the same time, adequately serving the non-priority UEs. In one embodiment, resource allocation, routing, and/or scheduling is adapted such that priority UEs are served with high priority, and the non-priority UEs (a.k.a., "normal" UEs) are served by the IAB nodes in some so-called "dead" periods. Also, in some embodiments, the resource allocation is updated and, possibly, new IAB nodes are added to the network, to guarantee the service rate constraints of the priority UEs. Further, in some embodiments, the channel measurements from non-priority UEs, the network load distribution, and traffic prediction of priority UEs can be used to facilitate a rapid decision making on resource allocation and the topology adaptation of the IAB network.

### BRIEF DESCRIPTION OF THE DRAWINGS

The accompanying drawings, which are incorporated herein and form part of the specification, illustrate various embodiments.
FIG. 1 illustrates an IAB network according to an embodiment.
FIG. 2 illustrates dead periods according to an embodiment.
FIG. 3 illustrates dead periods according to an embodiments.
FIG. 4 illustrates a priority UE attempting to connect to the IAB network.
FIG. 5 illustrates adding a new IAB access node to an existing IAB network.

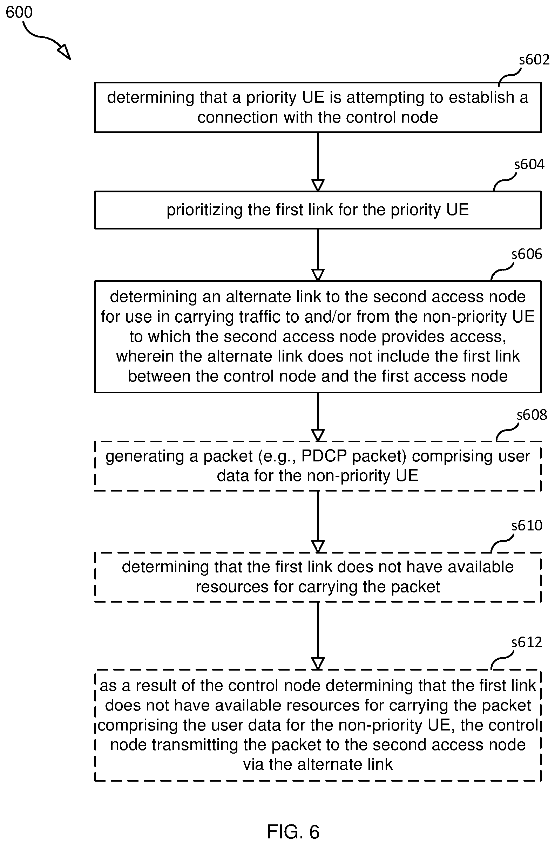

FIG. 6 is a flowchart illustrating a process according to some embodiments.

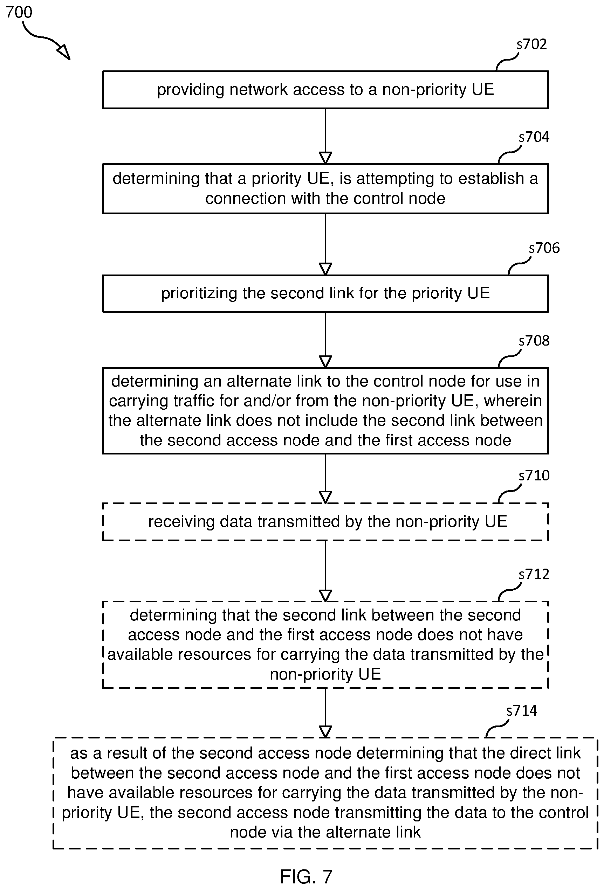

FIG. 7 is a flowchart illustrating a process according to some embodiments.
FIG. 8 illustrates an IAB control node according to some embodiments.
FIG. 9 illustrates an IAB access node according to some embodiments.

### DETAILED DESCRIPTION

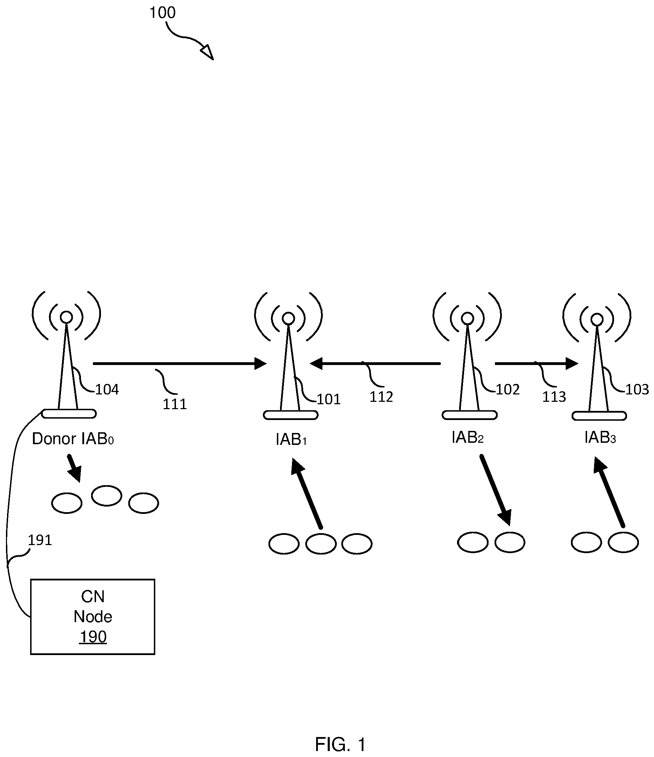

FIG. 1 illustrates an IAB network 100 according to an embodiment. As illustrated in FIG. 1, IAB network includes: i) an IAB control node 104 (a.k.a., Donor IAB, IAB-Donor, or IAB₀) that has a connection 191 (e.g., fiber connection) to a core network node 190 and ii) IAB access nodes 101-103 (a.k.a., IAB-nodes). Nodes 101-104 may serve one or more UEs (represented in FIG. 1 as the small ovals). As further illustrated in FIG. 1, there is i) a first direct wireless backhaul link 111 between IAB₀ and IAB₁, ii) a second direct wireless backhaul link 112 between IAB₁ and IAB₂, and iii) a third direct wireless backhaul link 113 between IAB₂ and IAB₃.

In IAB networks, for communications over the wireless backhaul links, the UL and DL transmission does not follow the common definition, as both endpoints of the backhaul links are IAB nodes. However, for simplicity, we refer to data transmission from an IAB-node 101, 102, 103 towards the IAB-donor 104 as UL transmission, and we refer to data transmission from the IAB-donor 104 towards an IAB-node as DL transmission. The proposed setup is applicable for both DL and UL transmissions.

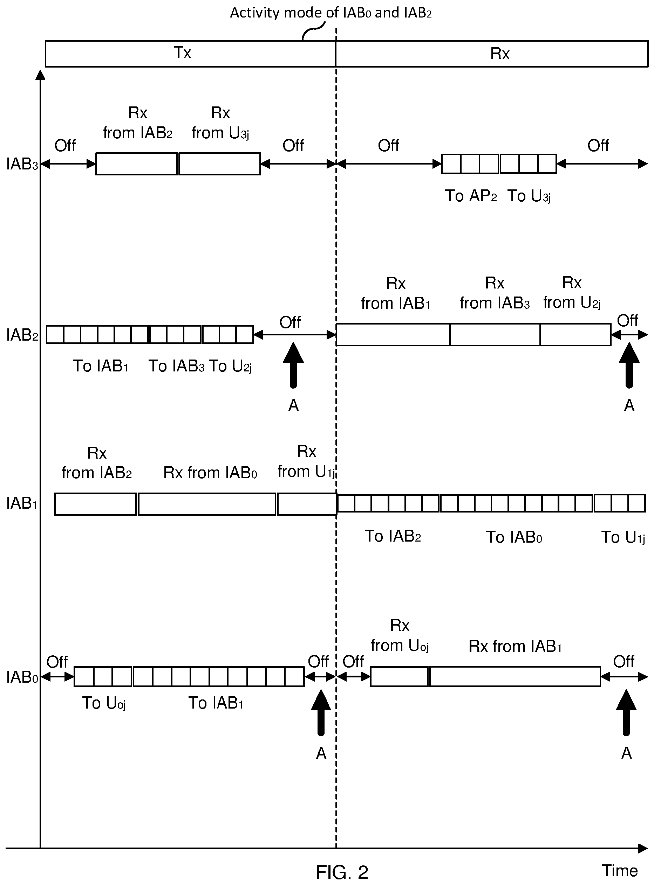

We may consider different scheduling mechanisms for IAB networks and the proposed method is applicable for different methods of resource allocation. In one example approach, as shown in FIG. 2, for each IAB node 101-104, a time slot is divided into transmit (Tx) and receive (Rx) sub-slots and in each one we have backhaul and access communications (here, the slot is a general term which can be interpreted as any time duration, e.g., it can be a number of subframes, or a number of slots or it can be a TDD configuration period for IAB as defined in 3GPP). Then, with an IAB node being in, e.g., Tx mode, its neighbor IAB nodes in both upstream and downstream are in the Rx mode. Let us consider a network with *N* IAB nodes and m UEs per IAB node. Also, we denote the UEs served by *IABᵢ* by *Uᵢⱼ,j* = 1, ... , *m*.

Considering FIG. 2, in each slot the IAB-donor needs to send 2*Nm* signals (for both its m UEs (m DL and m UL signals) in access and the DL/UL backhaul signals for (*N* - 1)m UEs of the other IAB nodes). Then, it can be easily shown that IAB node *i* > 0 needs to transfer 2(2*Nm* - *im)* signals in total (access and backhaul, DL and UL). As a result, the second node, *IAB*₁ in FIG. 1, is the busiest node being active during the whole time slot, while other nodes may be off in some periods. These periods, which we refer to as "reserved" or "dead" periods, are time slots where one IAB node may be off and wait for the previous hops to finish their data transmission. As an example, consider Point A in FIG. 2 where, while *IAB*₁ performs access communication, *IAB*₀ and *IAB*₂ are off.

On the other hand, priority UEs (e.g., public safety UEs) need on-demand coverage with high reliability and low end-to-end transmission delay. For instance, consider a public safety network where a building on fire should be covered immediately. Also, the public safety UEs have higher priority, compared to normal UEs. Finally, as opposed to normal UEs, the public safety UEs may come to the network abruptly with no pre-planning. Thus, with public safety UEs accessing to the network, we need to adapt the resource allocation quickly such that they are covered with high reliability/availability. At the same time, it is desirable to still serve as many as possible normal UEs. This is a motivation for this disclosure.

This disclosure describes an adaptive IAB-based data transmission method for, among other things, public safety networks. An objective is to: 1) provide the priority UEs with quick on-demand coverage, 2) reduce the delay of access to the network in the presence of priority UEs, and 3) at the same time, serve as many as possible normal UEs.

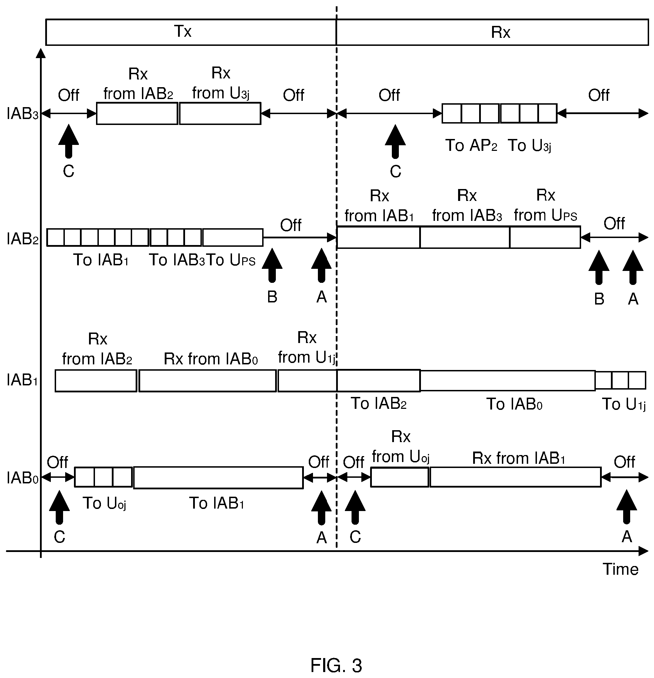

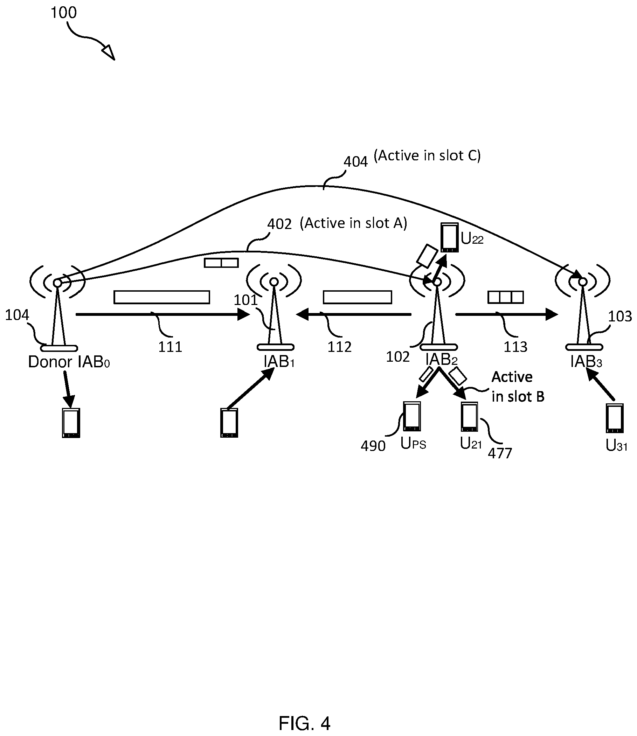

Let us assume that a priority UE 490 (see FIG. 4), denoted *U*_{PS} in FIG. 4, is attempting to access network 100 (e.g., the priority UE is performing a well-known random access procedure), where network 100 is currently serving normal UEs, e.g., *U*₂₁, *U*₂₂ and *U*₃₁. In this way, the data transmission may, in some embodiments, be adapted as follows:
1) At least part of the spectrum resources of the direct *IAB*₀ *- IAB*₁ *- IAB*₂ path is allocated to the priority UE, *U*_{PS}. Also, according to the service rate requirements of the priority UE, the resource allocation (e.g.,, the scheduling and rate/power allocation are updated). Moreover, the IAB-nodes *IAB*₁ and *IAB*₂ clear their respective buffers the buffered data of the normal UEs which are not supposed to be served through the *IAB*₀ *- IAB*₁ *- IAB*₂ path, to keep the buffers free for possible use in data transmission/from the priority UE.
2) The normal UEs, i.e., *U*₂₁, *U*₂₂ and *U*₃₁, are served through the direct transmission from *IAB*₀ to *IAB*₂ and *IAB*₃ during the dead periods. For instance, considering FIG. 4, *IAB*₀ uses the direct *IAB*₀ *- IAB*₂ link 402 to directly send the data of *U*₂₁ and *U*₂₂ to *IAB*₂ during the dead period A shown in FIG. 3. Then, *IAB*₂ uses the dead period B shown in FIG. 3 for access to *U*₂₁ and *U*₂₂. On the other hand, *IAB*₀ uses the dead period C in FIG. 3 to serve *IAB*₃ with the data of *U*₃₁ directly. Then, because the *IAB*₀ *- IAB*₂ link 402 and *IAB*₀ *- IAB*₃ link 404 experience lower signal-to-interference plus noise ratios (SINRs), compared to the links in the *IAB*₀ *- IAB*₁ *- IAB*₂ path, the data rates and beamforming of, e.g., *IAB*₀ will be adapted correspondingly. In this way, the normal UEs still receive their required messages, but with lower rate/higher scheduling delay.
3) The channel measurements from normal UEs, the network load distribution, and traffic prediction of priority UEs can be used to facilitate the rapid decision making on resource allocation and the topology adaptation of the IAB network (e.g., the radio resources, the rate adaptation/beamforming rules, which are required for data transmission in the direct *IAB*₀ *- IAB*₂ and *IAB*₀ *- IAB*₃ links, are determined offline, and before priority UE attempts to connect to the IAB-donor). Then, with a priority UE requesting access, the data transmission to the normal UE is immediately switched to the alternative paths and dead periods. This makes it possible for the priority UE to get connected to the network with low delay/contention probability.

As illustrated above, when a priority UE accesses the network (e.g., performs the random access procedure to establish a Radio Resource Control (RRC) connection with IAB₀), at least some of the non-priority UEs are served by the IAB nodes during the dead periods. Also, the routing for data transmission to the non-priority UEs is adapted such that the direct link between IAB₀ and IAB₁ and the direct link between IAB₁ and IAB₂ are kept free for the data transmission to the priority UE. Finally, the resource allocation and the rate adaptation/beamforming to IAB paths connecting to the non-priority UEs during the dead periods are determined offline such that the network is prepared to switch to the alternative paths immediately, when a priority UE attempts to establish a connection with the network.

In this way, the presence of IAB nodes increases the coverage and improves the reliability for data transmission to priority UEs. Also, the proposed scheme makes it possible to serve the priority UEs with low latency and guarantee their service rate requirements while at the same time serve as many normal UEs as possible.

It is noted that, depending on the service rate requirements of the priority UE, still some parts of the spectrum resources in the *IAB*₀ *- IAB*₁ *- IAB*₂ path may be available for the normal UEs, and only some of them may be moved to the alternative paths.

In one embodiments, *U*₃₁ is being served through the *IAB*₀ *- IAB*₃ link during the dead period C. The associated data of *U*₃₁ can, however, be sent through the *IAB*₀ *- IAB*₂ *- IAB*₃ path, depending on the number of UEs/channels qualities.

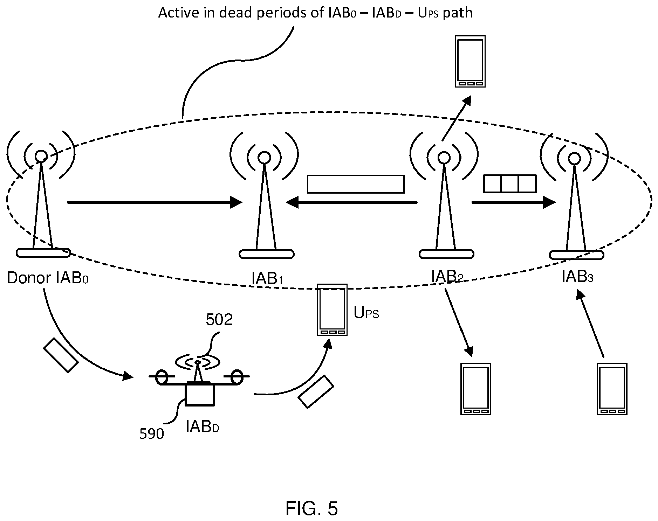

In another embodiment (see FIG. 5), a new IAB-node (IAB_{D}) 502 (e.g., an IAB-node that is carried by a drone 590) can be added to the network 100. In such setup, the donor *IAB*₀ may prioritize the *IAB*₀ *- IAB_{D} - U_{PS}* path and be connected to the *IAB*₀ *- IAB*₁ *- IAB*₂ *- IAB*₃ path only in the dead periods of the *IAB*₀ *- IAB_{D} - U_{PS}* path. In such cases, the IAB nodes of the *IAB*₀ *- IAB*₁ *- IAB*₂ *- IAB*₃ path do not need to adapt their beamforming and perform channel measurement for data transmission in the dead periods.

In short, as described herein, the network adapts the resource allocation and/or the routing and backhaul topology to serve priority UEs with high priority and guaranteed QoS, while some normal UEs are served by the IAB nodes in some "reserved" or "dead" periods. The channel measurements from normal UEs, the network load distribution, and traffic prediction of priority UEs are be used to facilitate a rapid decision making on resource allocation and the topology adaptation of the IAB network.

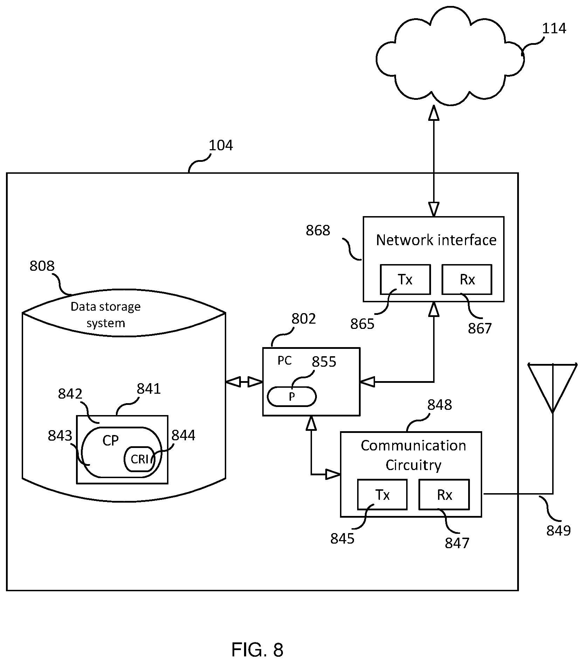

FIG. 8 is a block diagram of control node 104, according to some embodiments, for performing network node methods disclosed herein. As shown in FIG. 8, control node 104 may comprise: processing circuitry (PC) 802, which may include one or more processors (P) 855 (e.g., one or more general purpose microprocessors and/or one or more other processors, such as an application specific integrated circuit (ASIC), field-programmable gate arrays (FPGAs), and the like), which processors may be co-located in a single housing or in a single data center or may be geographically distributed (i.e., control node 104 may be a distributed computing apparatus); at least one network interface 868 comprising a transmitter (Tx) 865 and a receiver (Rx) 867 for enabling control node 104 to transmit data to and receive data from other nodes connected to a core network 110 (e.g., an Internet Protocol (IP) network) to which network interface 868 is connected; communication circuitry 848, which is coupled to an antenna arrangement 849 comprising one or more antennas and which comprises a transmitter (Tx) 845 and a receiver (Rx) 847 for enabling control node 104 to transmit data and receive data (e.g., wirelessly transmit/receive data); and a local storage unit (a.k.a., "data storage system") 808, which may include one or more non-volatile storage devices and/or one or more volatile storage devices. In embodiments where PC 802 includes a programmable processor, a computer program product (CPP) 841 may be provided. CPP 841 includes a computer readable medium (CRM) 842 storing a computer program (CP) 843 comprising computer readable instructions (CRI) 844. CRM 842 may be a non-transitory computer readable medium, such as, magnetic media (e.g., a hard disk), optical media, memory devices (e.g., random access memory, flash memory), and the like. In some embodiments, the CRI 844 of computer program 843 is configured such that when executed by PC 802, the CRI causes control node 104 to perform steps described herein (e.g., steps described herein with reference to the flow charts). In other embodiments, control node 104 may be configured to perform steps described herein without the need for code. That is, for example, PC 802 may consist merely of one or more ASICs. Hence, the features of the embodiments described herein may be implemented in hardware and/or software.

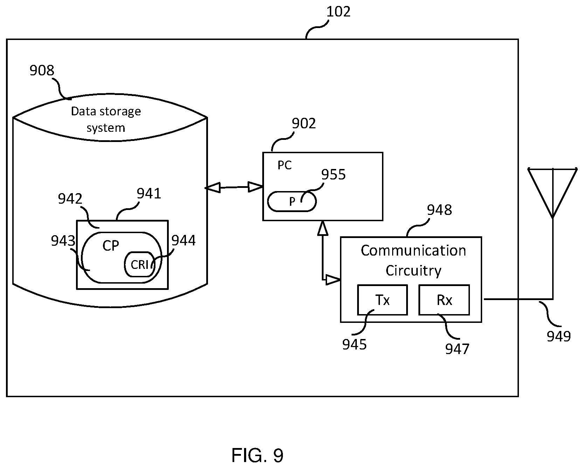

FIG. 9 is a block diagram of access node 102, according to some embodiments. As shown in FIG. 9, access node 102 may comprise: processing circuitry (PC) 902, which may include one or more processors (P) 955 (e.g., one or more general purpose microprocessors and/or one or more other processors, such as an application specific integrated circuit (ASIC), field-programmable gate arrays (FPGAs), and the like); communication circuitry 948, which is coupled to an antenna arrangement 949 comprising one or more antennas and which comprises a transmitter (Tx) 945 and a receiver (Rx) 947 for enabling access node 102 to transmit data and receive data (e.g., wirelessly transmit/receive data); and a local storage unit (a.k.a., "data storage system") 908, which may include one or more non-volatile storage devices and/or one or more volatile storage devices. In embodiments where PC 902 includes a programmable processor, a computer program product (CPP) 941 may be provided. CPP 941 includes a computer readable medium (CRM) 942 storing a computer program (CP) 943 comprising computer readable instructions (CRI) 944. CRM 942 may be a non-transitory computer readable medium, such as, magnetic media (e.g., a hard disk), optical media, memory devices (e.g., random access memory, flash memory), and the like. In some embodiments, the CRI 944 of computer program 943 is configured such that when executed by PC 902, the CRI causes access node 102 to perform steps described herein (e.g., steps described herein with reference to the flow charts). In other embodiments, access node 102 may be configured to perform steps described herein without the need for code. That is, for example, PC 902 may consist merely of one or more ASICs. Hence, the features of the embodiments described herein may be implemented in hardware and/or software.

While various embodiments are described herein, it should be understood that they have been presented by way of example only, and not limitation. Thus, the breadth and scope of this disclosure should not be limited by any of the above-described exemplary embodiments, rather defined by the following appended claims.

## Claims

1. A method (600) in an integrated access and backhaul (IAB) network (100) comprising a control node (104), wherein the control node is a donor node in the IAB network, a first access node (101), wherein the first access node is a parent node in the IAB network, and a second access node (102), wherein the second access node is a child node of the first access node in the IAB network, wherein there is a first link (111) between the control node (104) and the first access node (101) and there is a second link (112) between the first access node (101) and the second access node (102), and wherein the second access node (102) provides network access to a non-priority user equipment, UE (477), the method comprising:
the control node determining (s602) that a priority UE (490) is attempting to establish a connection with the network;
**characterized in that**:
after determining that the priority UE (490) is attempting to establish a connection with the network, the control node prioritizing (s604) at least the first link (111) for the priority UE; and
the control node determining (s606) an alternate direct link (402) to the second access node, wherein the alternate direct link (402) does not include the first link (111), for use in switching data transmission and carrying traffic to and/or from the non-priority UE to which the second access node provides access, wherein the alternate direct link (402) does not include radio resources reserved for the priority UE.

2. The method of claim 1, further comprising:
the control node generating (s608) a packet comprising user data for the non-priority UE;
the control node determining (s610) that the first link does not have available resources for carrying the packet; and
as a result of the control node determining that the first link does not have available resources for carrying the packet comprising the user data for the non-priority UE, the control node transmitting (s612) the packet to the second access node via the alternate link, wherein transmitting the packet to the second access node via the alternate link comprises:
the control node buffering the packet at least until the occurrence of a period of time during which the control node does not have the opportunity to transmit data to first access node via the first link; and
during the period of time, transmitting the data to the second access node via the alternate link.

3. The method of claim 1 or 2, further comprising the second access node prioritizing the second link between the second access node and the first access node for the priority UE.

4. The method of claim 2, further comprising:
the second access node receiving data transmitted by the non-priority UE;
the second access node determining that the second link between the second access node and the first access node does not have available resources for carrying the data transmitted by the non-priority UE; and
as a result of the second access node determining that the second link between the second access node and the first access node does not have available resources for carrying the data transmitted by the non-priority UE, the second access node transmitting the data to the control node via the alternate link, wherein transmitting the data to the control node via the alternate link comprises:
the second access node buffering the data at least until the occurrence of a period of time during which the second access node does not have the opportunity to transmit data to first access node via the second link; and
during the period of time, transmitting the data to the control node via the alternate link.

5. The method of any one of claims 1-4, further comprising:
the second access node determining that the priority UE is attempting to establish a connection with the network via the second access node; and
after determining that the priority UE is attempting to establish the connection, the second access node freeing resources and allocating the freed resources to the priority UE, wherein freeing resources comprises the second access node clearing from a transmit buffer for the second link between the second access node and the first access node data that was received from the non-priority UE or prepared for transmitting to the non-priority UE, thereby freeing resources for the priority UE.

6. The method of any one of claims 1-4, further comprising:
the first access node determining that the priority UE is attempting to establish a connection with the network; and
after determining that the priority UE is attempting to establish the connection, the first access node freeing resources and allocating the freed resources to the priority UE.

7. The method of any one of claims 1-6, wherein the control node determines that the priority UE is attempting to establish a connection with the network by receiving, via the first link, a Radio Resource Control (RRC) message transmitted by the priority UE.

8. The method of any one of claims 1-7, wherein
the control node determines the alternate link to the second access node prior to the control node determining that the priority UE is attempting to establish a connection with the network, and
the control node determines the alternate link to the second access node based on a predicted channel condition, a distribution of traffic in the network, and/or a traffic prediction for the priority UE.

9. The method of any one of claims 1-8, further comprising:
after determining that the priority UE (490) is attempting to establish a connection, prioritizing (s604) the second link (112) for the priority UE.

10. The method of any one of claims 1-9, further comprising:
after the control node determines (s602) that a priority UE (490) is attempting to establish a connection with the network, the control node transmitting to the first and/or second access node a message comprising an identifier identifying the priority UE and indicating that the identified UE is a priority UE.

11. A method (700) in an integrated access and backhaul (IAB) network (100) comprising a control node (104), wherein the control node is a donor node in the IAB network, a first access node (101), wherein the first access node is a parent node in the IAB network, and a second access node (102), wherein the second access node is a child node of the first access node in the IAB network, wherein there is a first link (111) between the control node (104) and the first access node (101) and there is a second link (112) between the second access node (102) and the first access node (101), the method comprising:
the second access node providing (s702) network access to a non-priority user equipment, UE;
the second access node determining (s704) that a priority UE (490) is attempting to establish a connection with the network;
**characterized in that**:
after determining that the priority UE is attempting to establish a connection with the network, the second access node prioritizing (s706) the second link for the priority UE; and
the second node determining (s708) an alternate direct link (402) to the control node, wherein the alternate direct link (402) does not include the second link (112), for use in switching data transmission and carrying traffic for and/or from the non-priority UE, wherein the alternate direct link (402) does not include radio resources reserved for the priority UE.

12. The method of claim 11, further comprising:
the second access node receiving (s710) data transmitted by the non-priority UE;
the second access node determining (s712) that the second link between the second access node and the first access node does not have available resources for carrying the data transmitted by the non-priority UE; and
as a result of the second access node determining that the second link between the second access node and the first access node does not have available resources for carrying the data transmitted by the non-priority UE, the second access node transmitting (s714) the data to the control node via the alternate link, wherein transmitting the data to the control node via the alternate link comprises:
the second access node buffering the data at least until the occurrence of a period of time during which the second access node does not have the opportunity to transmit data to first access node via the second link; and
during the period of time, transmitting the data to the control node via the alternate link.

13. The method of claim 12, further comprising:
after determining that the priority UE is attempting to establish the connection, the second access node freeing resources and allocating the freed resources to the priority UE, wherein freeing resources comprises the second access node clearing from a transmit buffer for the second link between the second access node and the first access node data that was received from the non-priority UE, thereby freeing resources for the priority UE.

14. The method of claim 12 or 13, wherein the second access node determines that a priority UE is attempting to establish a connection with the network via the second access node by: i) receiving, via a Physical Random Access Channel, PRACH, a random access preamble transmitted by the priority UE or ii) or receiving a priority identifier from the control node.

15. The method of any one of claims 12-14, wherein the second access node determines that a priority UE is attempting to establish a connection with the network via the second access node by receiving, via a Physical Random Access Channel, PRACH, a random access preamble transmitted by the priority UE and determining that the random access preamble is a preamble reserved for priority UEs or determining that a PRACH occasion that was used to transmit the random access preamble is reserved for priority UEs.

16. A computer program comprising instructions which when executed by processing circuitry of a control node (104) causes the control node (104) to perform the method of any one claims 1-2 or 7-10.

17. A computer program comprising instructions which when executed by processing circuitry of an access node (102) causes the access node (102) to perform the method of any one claims 11 - 15.

18. A carrier containing the computer program of claim 16 or 17, wherein the carrier is one of an electronic signal, an optical signal, a radio signal, and a computer readable storage medium.

19. A control node (104) the control node being adapted to perform the method of any one of claims 1-2 or 7-10.

20. A second access node (102) the second access node being adapted to perform the method of any one of claims 11-15.

## Patentansprüche

1. Verfahren (600) in einem integrierten Zugangs- und Backhaul- (IAB-) Netzwerk (100), das einen Steuerknoten (104), wobei der Steuerknoten ein Geberknoten im IAB-Netzwerk ist, einen ersten Zugangsknoten (101), wobei der erste Zugangsknoten ein übergeordneter Knoten im IAB-Netzwerk ist, und einen zweiten Zugangsknoten (102) umfasst, wobei der zweite Zugangsknoten ein untergeordneter Knoten des ersten Zugangsknotens im IAB-Netzwerk ist, wobei es zwischen dem Steuerknoten (104) und dem ersten Zugangsknoten (101) eine erste Verbindung (111) gibt und es zwischen dem ersten Zugangsknoten (101) und dem zweiten Zugangsknoten (102) eine zweite Verbindung (112) gibt, und wobei der zweite Zugangsknoten (102) einer Benutzerausrüstung, UE, ohne Priorität (477), Netzwerkzugang bereitstellt, wobei das Verfahren umfasst:
Bestimmen (s602), durch den Steuerknoten, dass eine UE mit Priorität (490) versucht, eine Verbindung mit dem Netzwerk herzustellen;
**dadurch gekennzeichnet, dass**:
nach dem Bestimmen, dass die UE mit Priorität (490) versucht, eine Verbindung mit dem Netzwerk herzustellen, der Steuerknoten mindestens die erste Verbindung (111) für die UE mit Priorität priorisiert (s604); und
der Steuerknoten eine alternative Direktverbindung (402) zum zweiten Zugangsknoten, wobei die alternative Direktverbindung (402) die erste Verbindung (111) nicht beinhaltet, zur Verwendung bei der Vermittlung von Datenübertragung bestimmt (s606), und
Verkehr zu und/oder von der UE ohne Priorität, zu der der zweite Zugangsknoten Zugang bereitstellt, übermittelt, wobei die alternative Direktverbindung (402) keine Funkressourcen beinhaltet, die für die UE mit Priorität reserviert sind.

2. Verfahren nach Anspruch 1, weiter umfassend:
Erzeugen (s608) eines Pakets, das Benutzerdaten für die UE ohne Priorität umfasst, durch den Steuerknoten;
Bestimmen (s610), durch den Steuerknoten, dass die erste Verbindung keine verfügbaren Ressourcen zum Übermitteln des Pakets besitzt; und
als Ergebnis des Bestimmens durch den Steuerknoten, dass die erste Verbindung keine verfügbaren Ressourcen zum Übermitteln des Pakets, das die Benutzerdaten für die UE ohne Priorität umfasst, besitzt, Übertragen (s612) des Pakets durch den Steuerknoten über die alternative Verbindung an den zweiten Zugangsknoten, wobei das Übertragen des Pakets über die alternative Verbindung an den zweiten Zugangsknoten umfasst:
Puffern des Pakets durch den Steuerknoten mindestens bis zum Auftreten einer Zeitspanne, während der der Steuerknoten keine Möglichkeit besitzt, Daten über die erste Verbindung an den ersten Zugangsknoten zu übertragen; und
während dieser Zeitspanne Übertragen der Daten an den zweiten Zugangsknoten über die alternative Verbindung.

3. Verfahren nach Anspruch 1 oder 2, das weiter das Priorisieren der zweiten Verbindung zwischen dem zweiten Zugangsknoten und dem ersten Zugangsknoten für die UE mit Priorität durch den zweiten Zugangsknoten umfasst.

4. Verfahren nach Anspruch 2, weiter umfassend:
Empfangen, durch den zweiten Zugangsknoten, von Daten, die von der UE ohne Priorität übertragen werden;
Bestimmen, durch den zweiten Zugangsknoten, dass die zweite Verbindung zwischen dem zweiten Zugangsknoten und dem ersten Zugangsknoten keine verfügbaren Ressourcen zum Übermitteln der Daten, die von der UE ohne Priorität übertragen werden, besitzt; und
als Ergebnis des Bestimmens durch den zweiten Zugangsknoten, dass die zweite Verbindung zwischen dem zweiten Zugangsknoten und dem ersten Zugangsknoten keine verfügbaren Ressourcen zum Übermitteln der Daten, die von der UE ohne Priorität übertragen werden, besitzt, Übertragen der Daten durch den zweiten Zugangsknoten über die alternative Verbindung an den Steuerknoten, wobei das Übertragen der Daten über die alternative Verbindung an den Steuerknoten umfasst:
Puffern der Daten durch den zweiten Zugangsknoten mindestens bis zum Auftreten einer Zeitspanne, während der der zweite Zugangsknoten keine Möglichkeit besitzt, Daten über die zweite Verbindung an den ersten Zugangsknoten zu übertragen; und
während dieser Zeitspanne Übertragen der Daten über die alternative Verbindung an den Steuerknoten.

5. Verfahren nach einem der Ansprüche 1-4, weiter umfassend:
Bestimmen, durch den zweiten Zugangsknoten, dass die UE mit Priorität versucht, über den zweiten Zugangsknoten eine Verbindung mit dem Netzwerk herzustellen; und
nach dem Bestimmen, dass die UE mit Priorität versucht, die Verbindung herzustellen, Freigeben von Ressourcen durch den zweiten Zugangsknoten und Zuweisen der freigegebenen Ressourcen zu der UE mit Priorität, wobei das Freigeben von Ressourcen umfasst, dass der zweite Zugangsknoten aus einem Sendepuffer für die zweite Verbindung zwischen dem zweiten Zugangsknoten und dem ersten Zugangsknoten Daten löscht, die von der UE ohne Priorität empfangen wurden oder zur Übertragung an die UE ohne Priorität vorbereitet wurden, wodurch Ressourcen für die UE mit Priorität freigegeben werden.

6. Verfahren nach einem der Ansprüche 1-4, weiter umfassend:
Bestimmen, durch den ersten Zugangsknoten, dass die UE mit Priorität versucht, eine Verbindung mit dem Netzwerk herzustellen; und
nach dem Bestimmen, dass die UE mit Priorität versucht, die Verbindung herzustellen, Freigeben, durch den ersten Zugangsknoten, von Ressourcen und Zuweisen der freigegebenen Ressourcen zu der UE mit Priorität.

7. Verfahren nach einem der Ansprüche 1-6, wobei der Steuerknoten bestimmt, dass die UE mit Priorität versucht, eine Verbindung mit dem Netzwerk herzustellen, indem er über die erste Verbindung eine Funkressourcensteuerungs- (RRC-) Nachricht empfängt, die von der UE mit Priorität übertragen wird.

8. Verfahren nach einem der Ansprüche 1-7, wobei
der Steuerknoten die alternative Verbindung zum zweiten Zugangsknoten bestimmt, bevor der Steuerknoten bestimmt, dass die UE mit Priorität versucht, eine Verbindung mit dem Netzwerk herzustellen, und
der Steuerknoten die alternative Verbindung zum zweiten Zugangsknoten auf Basis eines vorhergesagten Kanalzustands, einer Verteilung von Verkehr im Netzwerk und/oder einer Verkehrsvorhersage für die UE mit Priorität bestimmt.

9. Verfahren nach einem der Ansprüche 1-8, weiter umfassend:
nach dem Bestimmen, dass die UE mit Priorität (490) versucht, eine Verbindung herzustellen, Priorisieren (s604) der zweiten Verbindung (112) für die UE mit Priorität.

10. Verfahren nach einem der Ansprüche 1-9, weiter umfassend:
nachdem der Steuerknoten bestimmt (s602), dass eine UE mit Priorität (490) versucht, eine Verbindung mit dem Netzwerk herzustellen, Übertragen, durch den Steuerknoten an den ersten und/oder den zweiten Zugangsknoten, einer Nachricht, die eine Kennung umfasst, die die UE mit Priorität identifiziert und angibt, dass die identifizierte UE eine UE mit Priorität ist.

11. Verfahren (700) in einem integrierten Zugangs- und Backhaul- (IAB-) Netzwerk (100), das einen Steuerknoten (104), wobei der Steuerknoten ein Geberknoten im IAB-Netzwerk ist, einen ersten Zugangsknoten (101), wobei der erste Zugangsknoten ein übergeordneter Knoten im IAB-Netzwerk ist, und einen zweiten Zugangsknoten (102) umfasst, wobei der zweite Zugangsknoten ein untergeordneter Knoten des ersten Zugangsknotens im IAB-Netzwerk ist, wobei es zwischen dem Steuerknoten (104) und dem ersten Zugangsknoten (101) eine erste Verbindung (111) gibt und es zwischen dem zweiten Zugangsknoten (102) und dem ersten Zugangsknoten (101) eine zweite Verbindung (112) gibt, wobei das Verfahren umfasst:
Bereitstellen (s702), durch den zweiten Zugangsknoten, von Netzwerkzugang für eine Benutzerausrüstung (UE) ohne Priorität;
Bestimmen (s704), durch den zweiten Zugangsknoten, dass eine UE mit Priorität (490) versucht, eine Verbindung mit dem Netzwerk herzustellen;
**dadurch gekennzeichnet, dass**:
nach dem Bestimmen, dass die UE mit Priorität versucht, eine Verbindung mit dem Netzwerk herzustellen, der zweite Zugangsknoten die zweite Verbindung für die UE mit Priorität priorisiert (s706); und
der zweite Knoten eine alternative Direktverbindung (402) zum Steuerknoten, wobei die alternative Direktverbindung (402) die zweite Verbindung (112) nicht beinhaltet, zur Verwendung bei der Vermittlung von Datenübertragung bestimmt (s708), und
Verkehr für die und/oder von der UE ohne Priorität übermittelt, wobei die alternative Direktverbindung (402) keine Funkressourcen beinhaltet, die für die UE mit Priorität reserviert sind.

12. Verfahren nach Anspruch 11, weiter umfassend:
Empfangen (s710) von Daten, die von der UE ohne Priorität übertragen werden, durch den zweiten Zugangsknoten;
Bestimmen (s712), durch den zweiten Zugangsknoten, dass die zweite Verbindung zwischen dem zweiten Zugangsknoten und dem ersten Zugangsknoten keine verfügbaren Ressourcen zum Übermitteln der Daten, die von der UE ohne Priorität übertragen werden, besitzt; und
als Ergebnis des Bestimmens durch den zweiten Zugangsknoten, dass die zweite Verbindung zwischen dem zweiten Zugangsknoten und dem ersten Zugangsknoten keine verfügbaren Ressourcen zum Übermitteln der Daten, die von der UE ohne Priorität übertragen werden, besitzt, Übertragen (s714) der Daten durch den zweiten Zugangsknoten über die alternative Verbindung an den Steuerknoten, wobei das Übertragen der Daten über die alternative Verbindung an den Steuerknoten umfasst:
Puffern der Daten durch den zweiten Zugangsknoten mindestens bis zum Auftreten einer Zeitspanne, während der der zweite Zugangsknoten keine Möglichkeit besitzt, Daten über die zweite Verbindung an den ersten Zugangsknoten zu übertragen; und
während dieser Zeitspanne Übertragen der Daten über die alternative Verbindung an den Steuerknoten.

13. Verfahren nach Anspruch 12, weiter umfassend:
nach dem Bestimmen, dass die UE mit Priorität versucht, die Verbindung herzustellen, Freigeben von Ressourcen durch den zweiten Zugangsknoten und Zuweisen der freigegebenen Ressourcen zu der UE mit Priorität, wobei das Freigeben von Ressourcen umfasst, dass der zweite Zugangsknoten aus einem Sendepuffer für die zweite Verbindung zwischen dem zweiten Zugangsknoten und dem ersten Zugangsknoten Daten löscht, die von der UE ohne Priorität empfangen wurden, wodurch Ressourcen für die UE mit Priorität freigegeben werden.

14. Verfahren nach Anspruch 12 oder 13, wobei der zweite Zugangsknoten bestimmt, dass eine UE mit Priorität versucht, über den zweiten Zugangsknoten eine Verbindung mit dem Netzwerk herzustellen, indem er: i) über einen physischen Direktzugriffskanal, PRACH, eine Direktzugriffspräambel empfängt, die von der UE mit Priorität übertragen wird, oder ii) eine Prioritätskennung vom Steuerknoten empfängt.

15. Verfahren nach einem der Ansprüche 12-14, wobei der zweite Zugriffsknoten bestimmt, dass eine UE mit Priorität versucht, über den zweiten Zugriffsknoten eine Verbindung mit dem Netzwerk herzustellen, indem er über einen physischen Direktzugriffskanal, PRACH, eine Direktzugriffspräambel empfängt, die von der UE mit Priorität übertragen wird, und bestimmt, dass die Direktzugriffspräambel eine Präambel ist, die für UEs mit Priorität reserviert ist, oder indem er bestimmt, dass eine PRACH-Möglichkeit, die zum Übertragen der Direktzugriffspräambel verwendet wurde, für UEs mit Priorität reserviert ist.

16. Computerprogramm, das Anweisungen umfasst, die, wenn sie von Verarbeitungsschaltungen eines Steuerknotens (104) ausgeführt werden, bewirken, dass der Steuerknoten (104) das Verfahren nach einem der Ansprüche 1-2 oder 7-10 durchführt.

17. Computerprogramm, das Anweisungen umfasst, die, wenn sie von Verarbeitungsschaltungen eines Zugangsknotens (102) ausgeführt werden, bewirken, dass der Zugangsknoten (102) das Verfahren nach einem der Ansprüche 11-15 durchführt.

18. Träger, der das Computerprogramm nach Anspruch 16 oder 17 enthält, wobei der Träger eines von einem elektronischen Signal, einem optischen Signal, einem Funksignal und einem computerlesbaren Speichermedium ist.

19. Steuerknoten (104), wobei der Steuerknoten geeignet ist, das Verfahren nach einem der Ansprüche 1-2 oder 7-10 durchzuführen.

20. Zweiter Zugangsknoten (102), wobei der zweite Zugangsknoten geeignet ist, das Verfahren nach einem der Ansprüche 11-15 durchzuführen.

## Revendications

1. Procédé (600) dans un réseau d'accès et de liaison terrestre intégrés (IAB) (100) comprenant un nœud de commande (104), dans lequel le nœud de commande est un nœud donneur du réseau IAB, un premier nœud d'accès (101), dans lequel le premier nœud d'accès est un nœud parent du réseau IAB, et un second nœud d'accès (102), dans lequel le second nœud d'accès est un nœud enfant du premier nœud d'accès du réseau IAB, dans lequel il y a une première liaison (111) entre le nœud de commande (104) et le premier nœud d'accès (101) et il y a une seconde liaison (112) entre le premier nœud d'accès (101) et le second nœud d'accès (102), et dans lequel le second nœud d'accès (102) fournit un accès réseau à un Équipement d'Utilisateur (UE) non prioritaire (477), le procédé comprenant :
la détermination (s602) par le nœud de commande qu'un UE prioritaire (490) tente d'établir une connexion avec le réseau ;
**caractérisé en ce que** :
après la détermination que l'UE prioritaire (490) tente d'établir une connexion avec le réseau, le nœud de commande donne la priorité (s604) à au moins la première liaison (111) pour l'UE prioritaire ; et
la détermination (s606) par le nœud de commande d'une liaison directe alternative (402) vers le second nœud d'accès, dans lequel la liaison directe alternative (402) n'inclut pas la première liaison (111) destinée à être utilisée dans une transmission de données de commutation et
le transport du trafic vers, et/ou à partir de, l'UE non prioritaire auquel le second nœud d'accès fournit un accès, dans lequel la liaison directe alternative (402) n'inclut pas de ressources radio réservées à l'UE prioritaire.

2. Procédé selon la revendication 1, comprenant en outre :
la génération (s608) par le nœud de commande d'un paquet comprenant des données utilisateur pour l'UE non prioritaire ;
la détermination (s610) par le nœud de commande que la première liaison ne présente pas de ressources disponibles pour transporter le paquet ; et
à la suite de la détermination par le nœud de commande que la première liaison ne présente pas de ressources disponibles pour transporter le paquet comprenant les données utilisateur pour l'UE non prioritaire, la transmission (s612) par le nœud de commande du paquet au second nœud d'accès par le biais de la liaison alternative, dans lequel la transmission du paquet au second nœud d'accès par le biais de la liaison alternative comprend :
la mise en mémoire tampon du paquet par le nœud de commande au moins jusqu'à l'apparition d'une période de temps pendant laquelle le nœud de commande n'a pas la possibilité de transmettre des données au premier nœud d'accès par le biais de la première liaison ; et
pendant la période de temps, la transmission des données au second nœud d'accès par le biais de la liaison alternative.

3. Procédé selon la revendication 1 ou 2, comprenant en outre le fait que le second nœud d'accès donne la priorité à la seconde liaison entre le second nœud d'accès et le premier nœud d'accès pour l'UE prioritaire.

4. Procédé selon la revendication 2, comprenant en outre :
la réception par le second nœud d'accès des données transmises par l'UE non prioritaire ;
la détermination par le second nœud d'accès que la seconde liaison entre le second nœud d'accès et le premier nœud d'accès ne présente pas de ressources disponibles pour transporter les données transmises par l'UE non prioritaire ; et
à la suite de la détermination par le second nœud d'accès que la seconde liaison entre le second nœud d'accès et le premier nœud d'accès ne présente pas de ressources disponibles pour transporter les données transmises par l'UE non prioritaire, la transmission par le second nœud d'accès des données au nœud de commande par le biais de la liaison alternative, dans lequel la transmission des données au nœud de commande par le biais de la liaison alternative comprend :
la mise en mémoire tampon des données par le second nœud d'accès au moins jusqu'à l'apparition d'une période de temps pendant laquelle le second nœud d'accès n'a pas la possibilité de transmettre des données au premier nœud d'accès par le biais de la seconde liaison ; et
pendant la période de temps, la transmission des données au nœud de commande par le biais de la liaison alternative.

5. Procédé selon l'une quelconque des revendications 1-4, comprenant en outre :
la détermination par le second nœud d'accès que l'UE prioritaire tente d'établir une connexion avec le réseau par le biais du second nœud d'accès ; et
après la détermination que l'UE prioritaire tente d'établir la connexion, la libération de ressources par le second nœud d'accès et l'allocation des ressources libérées à l'UE prioritaire, dans lequel la libération des ressources comprend l'effacement par le second nœud d'accès dans un tampon de transmission pour la seconde liaison entre le second nœud d'accès et le premier nœud d'accès des données qui ont été reçues de l'UE non prioritaire ou préparées pour être transmises à l'UE non prioritaire, ce qui permet de libérer des ressources pour l'UE prioritaire.

6. Procédé selon l'une quelconque des revendications 1-4, comprenant en outre :
la détermination par le premier nœud d'accès que l'UE prioritaire tente d'établir une connexion avec le réseau ; et
après la détermination que l'UE prioritaire tente d'établir la connexion, la libération de ressources par le premier nœud d'accès et l'allocation des ressources libérées à l'UE prioritaire.

7. Procédé selon l'une quelconque des revendications 1-6, dans lequel le nœud de commande détermine que l'UE prioritaire tente d'établir une connexion avec le réseau en recevant, par le biais de la première liaison, un message de commande de ressources radio (RRC) transmis par l'UE prioritaire.

8. Procédé selon l'une quelconque des revendications 1-7, dans lequel
le nœud de commande détermine la liaison alternative vers le second nœud d'accès avant que le nœud de commande ne détermine que l'UE prioritaire tente d'établir une connexion avec le réseau, et
le nœud de commande détermine la liaison alternative vers le second nœud d'accès sur la base d'une condition de canal prédite, d'une distribution du trafic dans le réseau et/ou d'une prévision de trafic pour l'UE prioritaire.

9. Procédé selon l'une quelconque des revendications 1-8, comprenant en outre :
après la détermination que l'UE prioritaire (490) tente d'établir une connexion, la priorisation (s604) de la seconde liaison (112) pour l'UE prioritaire.

10. Procédé selon l'une quelconque des revendications 1-9, comprenant en outre :
après la détermination (s602) par le nœud de commande qu'un UE prioritaire (490) tente d'établir une connexion avec le réseau, la transmission par le nœud de commande au premier et/ou au second nœud d'accès un message comprenant un identifiant identifiant l'UE prioritaire et l'indication que l'UE identifié est un UE prioritaire.

11. Procédé( 700) dans un réseau d'accès et de liaison terrestre intégrés (IAB) (100) comprenant un nœud de commande (104), dans lequel le nœud de commande est un nœud donneur du réseau IAB, un premier nœud d'accès (101), dans lequel le premier nœud d'accès est un nœud parent du réseau IAB, et un second nœud d'accès (102), dans lequel le second nœud d'accès est un nœud enfant du premier nœud d'accès du réseau IAB, dans lequel il y a une première liaison (111) entre le nœud de commande (104) et le premier nœud d'accès (101) et il y a une seconde liaison (112) entre le second nœud d'accès (102) et le premier nœud d'accès (101), le procédé comprenant :
la fourniture (s702) par le second nœud d'accès d'un accès réseau à un équipement utilisateur non prioritaire, UE ;
la détermination (s704) par le second nœud d'accès qu'un UE prioritaire (490) tente d'établir une connexion avec le réseau ;
**caractérisé en ce que** :
après la détermination que l'UE prioritaire tente d'établir une connexion avec le réseau, le second nœud d'accès donne la priorité (s706) à la seconde liaison pour l'UE prioritaire ; et
le second nœud détermine (s708) une liaison directe alternative (402) vers le nœud de commande, dans lequel la liaison directe alternative (402) n'inclut pas la seconde liaison (112), destinée à être utilisée dans la transmission de données de commutation et
le transport du trafic vers, et/ou à partir de, l'UE non prioritaire, dans lequel la liaison directe alternative (402) n'inclut pas de ressources radio à l'UE prioritaire.

12. Procédé selon la revendication 11, comprenant en outre :
la réception (s710) par le second nœud d'accès des données transmises par l'UE non prioritaire ;
la détermination (s712) par le second nœud d'accès que la seconde liaison entre le second nœud d'accès et le premier nœud d'accès ne présente pas de ressources disponibles pour transporter les données transmises par l'UE non prioritaire ; et
à la suite de la détermination par le second nœud d'accès que la seconde liaison entre le second nœud d'accès et le premier nœud d'accès ne présente pas de ressources disponibles pour transporter les données transmises par l'UE non prioritaire, la transmission (s714) par le second nœud d'accès des données au nœud de commande par le biais de la liaison alternative, dans lequel la transmission des données au nœud de commande par le biais de la liaison alternative comprend :
la mise en mémoire tampon des données par le second nœud d'accès au moins jusqu'à l'apparition d'une période de temps pendant laquelle le second nœud d'accès n'a pas la possibilité de transmettre des données au premier nœud d'accès par le biais de la seconde liaison ; et
pendant la période de temps, la transmission des données au nœud de commande par le biais de la liaison alternative.

13. Procédé selon la revendication 12, comprenant en outre :
après la détermination que l'UE prioritaire tente d'établir la connexion, la libération des ressources par le second nœud d'accès et l'allocation des ressources libérées à l'UE prioritaire, dans lequel la libération des ressources comprend l'effacement par le second nœud d'accès dans un tampon de transmission pour la seconde liaison entre le second nœud d'accès et le premier nœud d'accès des données qui ont été reçues de l'UE non prioritaire, ce qui permet de libérer des ressources pour l'UE prioritaire.

14. Procédé selon la revendication 12 ou 13, dans lequel le second nœud d'accès détermine qu'un UE prioritaire tente d'établir une connexion avec le réseau par le biais du second nœud d'accès en : i) recevant, par le biais d'un canal d'accès aléatoire physique, PRACH, un préambule d'accès aléatoire transmis par l'UE prioritaire ou ii) ou recevant un identifiant de priorité en provenance du nœud de commande.

15. Procédé selon l'une quelconque des revendications 12-14, dans lequel le second nœud d'accès détermine qu'un UE prioritaire tente d'établir une connexion avec le réseau par le biais du second nœud d'accès en recevant, par le biais d'un canal d'accès aléatoire physique, PRACH, un préambule d'accès aléatoire transmis par l'UE prioritaire et en déterminant que le préambule d'accès aléatoire est un préambule réservé à des UE prioritaires ou en déterminant qu'une occasion de PRACH qui a été utilisée pour transmettre le préambule d'accès aléatoire est réservée à des UE prioritaires.

16. Programme informatique comprenant des instructions qui, lorsqu'elles sont exécutées par des circuits de traitement d'un nœud de commande (104), amènent le nœud de commande (104) à effectuer le procédé selon l'une quelconque des revendications 1-2 ou 7-10.

17. Programme informatique comprenant des instructions qui, lorsqu'elles sont exécutées par des circuits de traitement d'un nœud d'accès (102), amènent le nœud d'accès (102) à effectuer le procédé selon l'une quelconque des revendications 11-15.

18. Support, contenant le programme informatique de la revendication 16 ou 17, dans lequel le support est l'un parmi un signal électronique, un signal optique, un signal radio et un support de stockage lisible par ordinateur.

19. Nœud de commande (104), le nœud de commande étant adapté pour effectuer le procédé selon l'une quelconque des revendications 1-2 ou 7-10.

20. Second nœud d'accès (102), le second nœud d'accès étant adapté pour effectuer le procédé selon l'une quelconque des revendications 11-15.
